# EUROPEAN PATENT APPLICATION

(11) **EP 2 418 611 A1**
(43) Date of publication of application: **15.02.2012**
(21) Application number: 10172381.5
(22) Date of filing: 10.08.2010
(51) Int. Cl.: G06Q 10/00, G06Q 50/00

(54) **Distributed architecture for paperwork imaging**

(71) Applicant: Deutsche Post AG, 53113 Bonn (DE)
(72) Inventor: Apthorp, Adrian Paul, RH7 6BH Lingfield Surrey (GB)
(74) Representative: Jostarndt, Hans-Dieter

(57) **Abstract**

The present invention provides a method for providing data files, comprising the steps of storing the data files on at least one local domain (1) in a data file store (13), of notifying at least a central domain (2) about the data file stored on at least one local domain (1), of providing a reference element to at least the central domain (2), wherein the reference element indicates the local domain (1) where the data file was stored, of transmitting search criteria for data files from a destination domain (3) to the central domain (2) in order to retrieve information about available data files and the local domain (1) on which the data files are stored, of sending the reference element assigned to the demanded data file from the central domain (2) to the destination domain (3), of requesting the demanded data file by submitting the reference element from the destination domain (3) to the local domain (1), where the demanded data filed is stored, and of sending the demanded data file from the local domain (1) to the destination domain (3). The invention further relates to s system executing the method.

## Description

### Field of the invention

The present invention relates to distributed computer systems and computer architecture for storing and referencing of large data files.

### Background of the invention

Courier services are specialised in delivering mail pieces of high priority, high value or high sensitivity in express goods mailing. Computer systems serving courier services for executing and organising logistic processes and further for the exchange of data with major customers are known.

Generally for international shipment of cargo paperwork concerning the content and customs declaration of mail pieces in form of waybills or shipping lists are mandatory. Additional services e.g. registered letters, additional papers or information in form of large data files are necessary. In some cases processing of shipment documents before the actual arrival of the cargo, e.g. for the reason of custom declaration paperwork, is advantageous.

Traditionally, waybill documents will be affixed to cargo units. Through an electronic submission of shipping documents by the delivery of cargo pieces can, however, may be significantly simplified.

For this reason it is desirable to provide an electronic processing of arbitrary cargo documents. Often, cargo documents are provided as scanned images of hand-written paper documents. Such a scanned document has a large amount of data. Accordingly, it is necessary to take steps to transfer such data to the place of clearance in a dependable and effective way. Due to different available data transmission capacity to the actual location of clearance, a solution must be found to allow an access to image documents with large amount of data in an easy and reliable way when it is needed, independent of the place of service and independent of locally available data transmission capacity.

### Summary of the invention

It is the object of the present invention to provide a flexible and time efficient method to pre-deliver shipment documents for custom declaration and/or delivery of physical objects as well as a corresponding system to execute the method.

This object is solved by a method for providing data files comprising:
- storing the data files on at least one local domain in a data file store,
- notifying at least a central domain about the data file stored on at least one local domain;
- providing a reference element to at least the central domain, wherein the reference element indicates the local domain where the data file was stored;
- transmitting search criteria for data files from a destination domain to the central domain in order to retrieve information about available data files and the local domain on which the data files are stored;
- sending the reference element assigned to the demanded data file from the central domain to the destination domain;
- requesting the demanded data file by submitting the reference element from the destination domain to the local domain, where the demanded data filed is stored; and
- sending the demanded data file from the local domain to the destination domain in response to the received reference element.

An integration of the data system satisfies the requirements for data retrieval in support of import processing and customer service. The method also supports requirements for ad-hoc data retrieval and enables the provision on a data retrieval capability for customers (or users). The data files may contain any type of information; preferably the data files are image files of shipment documents, in particular documents for shipment clearance procedures. The customer denotes any person or entity requiring certain data filed in order to further process the shipment. The worldwide economy requires a huge number of shipments across borders. Shipments have to allow crossing borders. Therefore several shipment documents have to be presented to the responsible administration in order to achieve a clearance for further shipment. The method according to the present invention enables to provide available data files of any document stored on a local domain on demand at another location, e.g. an import processing location to import shipments into a certain country far away from the physical storage location of the shipment document. The physical document itself is typically transported with to the shipments. This method therefore clearly improves the time to clear shipments and improves the availability of information, e.g. relating to the declarable shipment at the import processing location. The information is accessible for the processing location, e.g. an import processing location, as data files from the local domain, where the data files are associated with the required shipment documents. The information may include shipment airway bills, commercial invoices or any export paperwork. Eventually, signed documents confirming delivery can be provided to customers to confirm delivery.

The method is based on pulling demanded information from the corresponding system. The demanded information available on data files within the system will be retrieved from a remote location, the local domain. The local domain might be the shipment origin country. The origin country has direct access to the characteristic data of the shipment and initial information regarding sender, content, receiver, desired shipment route, and will fill the initial shipment documents physically. Therefore the documents related to the shipment are converted into data files (e.g. scanned) and stored at the location of the local domain. To retrieve a data file (e.g. an image of a document) in the system, the data file location information must be available at the destination domain (e.g. the import clearance location). Therefore the location information of all available data files is available at a central domain as reference elements, where all destination domains and local domains have access to. The demanded data file can be selected from the destination domain by checking the available reference elements at the central domain. The reference elements have a data format enabling small file size. Therefore only files with a small file size have to be checked via the connection (e.g. an internet connection) between destination domain and central domain in order to determine the required data file for further processing the shipment at the destination domain. Therefore the reference element is sent to the destination domain in another embodiment in a data format requiring less data storage capacity as the data file stored in the local domain, preferably the data format of the reference element is URL or URN. For example, the URL might have no pre-defined structure. After selecting the demanded data file from the checked available reference elements at the central domain, the information about the location of the demanded data file is present at the destination domain (via the reference element). The destination domain now sends the reference element to the corresponding local domain, where the data file is present. As response to the sent reference element, the demanded data file is sent to the requesting destination domain in its original file size. This method (or system) requires much less time to retrieve and therefore to receive the demanded data file due to the majority of exchanged files having a much lower file size than the original data files. The full (original) file size is transferred via the data connection only one time per request (when the data file is send from the local domain to the destination domain). In an embodiment the format of the requested data file sent to the destination domain is an image format, preferably a TIFF format. Alternatively, the request can be made for multiple data files representing multiple documents relating to multiple shipments. A shipping document present as an image in the TIFF format provides better quality of images and supports documents with multiple pages

The local domain, central domain and destination domain may comprise one or more server each. The connection between the domains may be established by standard web technology. The central domain represents the well-known location for all users of this method/system, where information about the location of required data files corresponding to required shipment documents can be retrieved.

In an embodiment also one or more destination domains are notified about a stored data file beside the central domain. In case of shipping documents, which are known to be provided to certain destination domains, the corresponding destination domains directly receive the reference elements assigned to the corresponding data files. Here, the destination domains can directly request the demanded data files from the local domains, where the data files are present. This will save time in the shipment procedure, because the search step at the central domain can be avoided in the case of data files known to be required.

In another embodiment the step of transmitting search criteria comprises the sending of data based attributes or criteria for clearance and availability as the query. The required data files can be found easier, if different types of search criteria can be sent to the central domain. The central domain is able to process different types of queries, related to data attributes or to criteria for clearance and availability. The possibility to send different types of search criteria will prevent missing the demanded data file. Therefore the central domain preferably comprises a shipment data store and a central index store separating the queries, where the data based attributes are sent to the central index store or the criteria for clearance and availability are sent to the shipment clearance store. In an embodiment, the shipment data store might be a store where the data are related to shipment clearance. Correspondingly, the shipment data store would be a shipment clearance store.

In another embodiment the method further comprises the step of converting the format of the data file into a GIF format at the destination domain. This avoids the necessity to have a TIFF viewer available at the destination domain.

In another embodiment the method further comprises the step of caching at least received data files at the destination domain at a proxy data server, preferably also caching notifications. This avoids resending of previously sent data files again to the same destination domain based on later requests to receive this data file. A cache is a component that improves performance by transparently storing data such that future requests for that data can be served faster. The data that is stored within a cache might be files that have been computed earlier or duplicates of original files that are stored elsewhere. If requested data files are contained in the cache (cache hit), this request can be served by simply reading the cache, which is comparably faster. Otherwise, the data has to be recomputed or fetched from its original storage location, which is comparably slower. Hence, the more requests can be served from the cache the better the overall system performance is.

In another embodiment the method further comprises the step of identifying shipments, for which shipment data files are required, with an import processing application. This will improve the speed of the shipping process, since shipments without the necessity to request additional shipping documents according to this method can be further process immediately. As an example the import processing application could be a software application processing shipment information and deciding about required additional shipment data files.

The invention further relates to a system for providing data files comprising at least one local domain, a central domain and at least one destination domain, where
- the local domain comprises a data file store to store data files and a notify interface connected to at least the central domain to send a notification about the data files stored on the local domain and to provide a reference element to at least the central domain, wherein the reference element indicates the local domain where the data file was stored,
- the central domain is further connected to the at least one destination domain and suitable to store at least the reference elements and suitable to provide information about the availability of data files based on search criteria for data files transmitted from the destination domain and to send the reference element assigned to the demanded data file to the destination domain; and where
- the destination domain is at least connected to the local domains via a retrieve interface to submit the reference element of the demanded date file to the local domain, where the demanded data filed is stored, and to receive the demanded data file from the local domain as response to the submitted reference element.

In an embodiment the central domain comprises a shipment clearance store with a shipment clearance information query interface and a central index store with a locate data interface both connected to the destination domain, where the search criteria are transmitted from the destination domains via the shipment clearance information query interface in case of search criteria for clearance and availability or via the locate data interface in case of search criteria for data attributes.

In another embodiment the data format of the reference elements is URL or URN and/or that the data file has an image format, preferably a TIFF format.

In another embodiment the destination domain further comprises a proxy data server suitable to cache at least received data files from the local domain, preferably also caching notifications. This avoids resending of previously sent data files again to the same destination domain based on later requests to receive this data file.

In another embodiment the destination domain further comprises an import processing application to identify shipments for which data filed are required for further processing. This component supports the identification of shipments for which additional documents, e.g. clearance processing documents, are required.

In another embodiment the local domain further comprises a data capture application suitable to provide data files to be stored in the data file store. This component manages the capture of data files, e.g. images, and the submission of the data files to local data server storing the data files at the local domain. Data capture, e.g. image capture, may be an inline activity or a separate batch processing activity.

However, the invention is not limited to shipment clearance. In alternative embodiments the method providing data files and the system to execute the method might be used to retrieve shipment related document images (data files) for other purposes, such as signed proof of delivery or to provide images of original shipment documents in response to a customer query.

### Brief description of the drawings

The aforementioned and other aspects of the invention will also be apparent from and elucidated with reference to the embodiments of the invention described herein after making reference to the drawings.

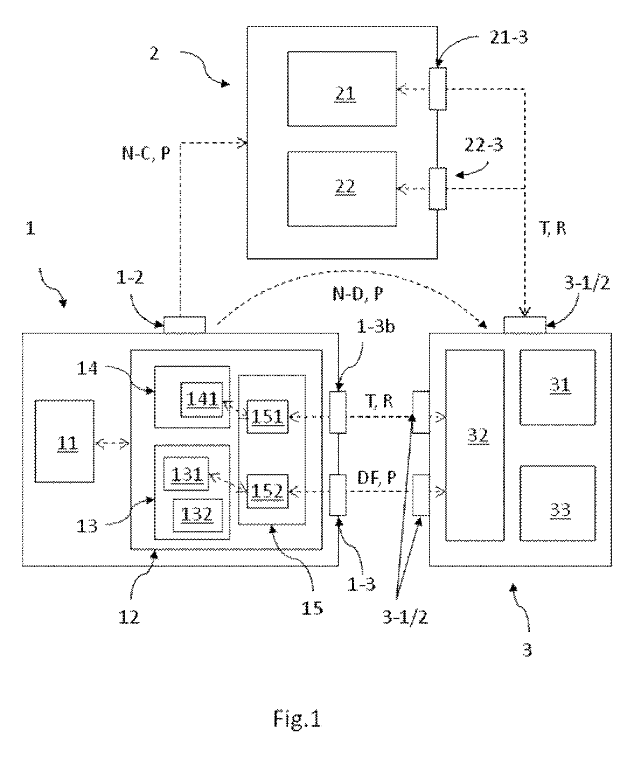

Figure 1 shows a schematic view of computer architecture in accordance with the present invention.

### Detailed description of embodiments

Figure 1 presents an embodiment of the basic structure of computer architecture. The architecture consists of a number of components 1, 2, 3, in which some are centrally provided, as for example the central domain 111, and other are distributed across the network, for example the local domain 1 and the destination domain 3. Different parts of the computer architecture are connected via network standard interfaces 1-2, 1-3, 1-3b, 21-3, 22-3, 3-1/2. The central domain 2 of the architecture provides services (shipment clearance information, reference elements of search data files) for querying the availability of a data file, e.g. an image of a shipment document, and establishing its location. The shipment information query service executable at the shipment clearance information store 21 of the central domain 2 enables a screening of shipments to indentify which data files representing shipment paperwork images are required for the clearance processing for the shipment (at the destination domain 3). The components shown in Fig.1 are as follows:

The local domain 1 comprises the following components:
A data capture application 11 provides data files from clearance paperwork or other cargo related documents. The information of the documents is captured and being passed to a data file store 13 of the local domain 1 in order to store the data file in a database 131. The capturing of data files may also be provided by a handheld scanner, a touch screen or the like device for data capturing. For example the signature of a customer may be captured in the mail delivery process.
The data file store 13 of the local domain 1 comprises the data file database 131 and the store logic 132. Within the database 131, large data files are stored. The database 131 may be embodied as a simple database with a low retention period or as a large memory archival system with full hierarchical large memory storage and management capabilities. The store logic 132 analyses the incoming data files stored at the data file store 13. For each data file which is stored on the local domain 1, the store logic 132 generates a reference element. The reference elements are stored in the index database 141 of an index store 14. The index database 141 then sends a message to the notification interface 1-2 and to an index query logic 151 located in the access server 15, respectively. The notification interface 1-2 in turn passes the reference element P, N-C to the corresponding interface 1-2 of the central domain 2 for storing the reference element and eventually additional data in the central domain 2. The further notification to the local index database 14 of the local domain 1 enables the processing of local queries from the destination domain 3 via the local locate data interface 1-3b of the access server 15.
The data server 12 manages the access to the database 131 for storage and retrieval of data files. When a data file is received from the data capture application 11 and stored in the database 131, a notification is generated and forwarded N-C to the central domain 2 via the notify interface 1-2. Preferably, the notification is send N-D in addition to the destination domains 3 directly.

The notifications N-C, N-D might be routed via DHL's message-based infrastructure, either using a common messaging platform or communications infrastructure. The notification is a fixed format with no separators between the fields. The notification may comprise multiple elements classified by business priority, e.g. mandatory, required, optional or conditional. Examples of such elements are: shipment airwaybill number, shipment origin service area, shipment destination service area, data file capture time, data file location code, data file capture station, data file type, data file size, data file location (URL), expiry time/date (when the data file is purged from the local domain) etc.

The access server 15 provides the interfaces between the data file requestor (at the destination domain 3) and the data file store 13 and is ideally co-located with the data file store 13. The interfaces of the access server 15 are (a) the retrieve interface 1-3 to receive the reference element from the destination domain 3 and to send the requested data file to the destination domain 3 and (b) the local locate data interface 1-3b to be able to receive local queries about stored data files from the destination domain 3 and process the queries in a index query logic 151. A data retrieval logic 152 is responsible to find the demanded data file assigned to the reference element in the database 131 as requested via the retrieve interface 1-3.

The local index store 14 of the local domain 1 maintains a copy of searchable attributes of the notification send out to the central domain 2 and the destination domains 3. Via the local locate data interface 13b of the access server 15 queries initiated by the destination domain 3 can be performed via the local index store 14 about the data files stored locally at this particular local domain 1 in order to retrieve a demanded data file at this local domain 1. However, the local index store 14 does not comprise any information about data files stored in other local domains.

The central domain 2 comprises the following components:
The central index store 22 provides a central lookup for data reference information (reference elements) for clearance processing. This index store 22 may also hold notifications of data files regarding delivery sheet images. This component 22 may be integrated into other environments in order to provide a seamless interface between querying shipment status and locating the data files associated with the shipment. To retrieve data files of delivery sheets in this way depends upon establishing a relationship between a delivery checkpoint and the notification about data files corresponding to the delivery sheets based on courier route information. The central index store 22 is connected to the destination domain 3 via the local data interface 22-3.
The shipment clearance information store 22 is provided for querying clearance related shipment and movement information in order to screen shipments for import processing. The query provided by this service allows querying of the data file location. This store 22 receives information for querying in form of customs request (or customs alert).

The destination domain 3 comprises the following components:
The browser 31 might be a standard web browser with either a TIFF plug-in or an external TIFF viewer configured as a helper application enabling customer service agents, import processing stuff and ad-hoc users to view the received data files directly on screen. An external TIFF viewer is available as standard with Windows 95.
The proxy data server 32 provides the possibility to cache reference elements and of retrieved data files. Reference elements received directly from local domains 1 are pro-actively cached by the distribution of the notification to the proxy data server that supports clearance processing. As a proxy this component 32 provides the same interfaces as the services it is acting as a proxy for: Locate data interface 1-3b and Retrieve data interface 1-3.

The internal data connections of local domain, central domain and destination domain are not shown in details.

The data file administration architecture identifies at least the following interfaces:
- Notify interface 1-2
- Retrieve interface 1-3
- Locate data interface 22-3, 1-3b
- Shipment clearance information query interface 21-3
- destination domain interface 3-1/2

These interfaces are being specialized for documents indexed by internal registration numbers or by any other computer-based registration system. However the same architecture may be used for indexing and retrieving documents, e.g. images, with a different key.

The architecture also includes the interfaces for querying shipment documents, e.g. comprising clearance information, to support the shipment.

Notification of at least the central domain about the availability of data files:
The notify interface 1-2 is an event based interface that sends a notification N-C, N-D to interested parties (at least to the central domain 2, optionally also to one or more destination domains 3) of the availability of a data file, e.g. an image of a document, and provides (P) a reference element for indicating the locating of the data file stored in the database 131 (local data server) of a local domain 1. Notifications N-C, N-D may be sent for shipment document and delivery sheet images present as data files at the local domain 1.

The reference element will be implemented by a URL, by a URN (Uniform Resource Name) or any other linking and reference system. Any other known suitable system may be used as well.

The notify interface 1-2 will be implemented with a message referred to as the large data reference message. This will be routed via proprietary computer message-based infrastructure, either using the Common Messaging Platform or Communications Infrastructure.

Requesting data files from the local domain 1:
The retrieve data interface 1-3 allows any destination domain 3 (here the user of the method or system) to request a data file, e.g. image of a shipment document, by passing (P) the corresponding reference element to a access server 15 as part of the local domain 1. In response to the request for a data file the access server 15 will either return (DF) the requested data file or an error message. In one embodiment the data file may be returned (DF) e.g. as image in TIFF format. And further the interface may be implemented using HTTP.

A standard TCP/IP port number, e.g. port 29001, has been identified for data file retrieval/request. This will enable data traffic on proprietary networks to be managed. Furthermore, it is thus possible to obtain data files, e.g. images of documents, on alternative routes to, such as fax or the like. Such procedure is advantageous in areas of the world where rather an Internet connection than a telephone is available.

Locate data interface of the central domain 2 (and optionally of the local domain 1): The locate Image interfaces 22-3, 13b allow a user (here at any destination domain 3) to search for a data file based on some attributes associated with it at the central domain 2, in particular at the central index store 22 of the central domain 2, by transmitting T search criteria to the central domain 1. The local data interface 22-3 provides access to the central index store 22. In the case of shipment documents the searchable attributes are attributes of a shipment, e.g. value, weight, product, or content description. In the case of delivery sheets as the data files the searchable attributes relate to the delivery route. In one embodiment the interface 22-3 may be implemented using HTTP. The local data interface 1-3b might be additional arranged at the local domain 1 providing access to a local index query logic142. This direct access from a destination domain 3 to a particular local domain 1 to search (T) for a particular data file might be used in case of reference elements sent (P) to the destination domain 3 directly.

Shipment clearance information query interface 21-3 of the central domain 2:
The shipment clearance information query interface 21-3 allows a user (here at the destination domain 3) to request information on shipments based upon criteria for clearance and availability. Based on this information the data files relating to a shipment can be located and retrieved (P) as described previously. In one embodiment the interface 21-3 may be implemented using HTTP.

Furthermore the destination domain has an interface 3-1/2 for being connected to the previously described interfaces 21-3, 22-3, 1-3, 1-3b of the central domain 2 and the local domains 1 for sending and receiving data related to search request, data request, etc. In one embodiment the interface 3-1/2 may be implemented using HTTP.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### List of reference numerals:

- 1: local domain
- 11: data capture application (at the local domain)
- 12: data server (at the local domain)
- 13: data file store (at the local domain)
- 131: database to store the data files (at the local domain)
- 132: store logic (at the local domain)
- 14: index store (at the local domain)
- 141: index database (at the local domain)
- 15: access server (at the local domain)
- 151: index query logic (at the local domain)
- 151: data retrieve logic (at local domain)
- 2: central domain
- 21: shipment clearance information store (at the central domain)
- 22: central index store (at the central domain)
- 3: destination domain
- 31: browser (at the destination domain)
- 32: proxy data server (at the destination domain)
- 33: import processing application (at the destination domain)
- 1-2: notify Interface
- 22-3: locate data Interface of the central domain
- 21-3: shipment clearance information query interface
- 1-3: retrieve data Interface
- 1-3b: local locate data Interface of the local domain
- 3-1/2: interface of the destination domain to the other components
- N-C: notifying the central domain
- N-D: notifying the destination domain
- T: transmitting search criteria
- P: providing / sending a reference element
- R: receiving at least one reference element
- DF: sending the demanded data files

## Claims

1. Method for providing data files, comprising:
- storing the data files on at least one local domain (1) in a data file store (13),
- notifying (N-C) at least a central domain (2) about the data file stored on at least one local domain (1);
- providing a reference element (P) to at least the central domain (2), wherein the reference element indicates the local domain (1) where the data file was stored;
- transmitting (T) search criteria for data files from a destination domain (3) to the central domain (2) in order to retrieve information about available data files and the local domain (1) on which the data files are stored;
- sending (R) the reference element assigned to the demanded data file from the central domain (2) to the destination domain (3);
- requesting the demanded data file by submitting the reference element (P) from the destination domain (3) to the local domain (1), where the demanded data filed is stored; and
- sending (DF) the demanded data file from the local domain (1) to the destination domain (3) in response to the received reference element.

2. Method according to claim 1, **characterized in that** beside the central domain (2) also one or more destination domains (3) are notified (N-D) about a stored data file.

3. Method according to claim 1 or 2, **characterized in that** the step of transmitting (T) search criteria comprises the sending of data based attributes or criteria for clearance and availability as the query

4. Method according to claim 3, **characterized in that** the central domain (2) comprises a shipment data store (21) and a central index store (22) and the step of transmitting (T) search criteria is either preformed by sending data based attributes to the central index store (22) or be sending criteria for clearance and availability to the shipment clearance store (21).

5. Method according to any of the preceding claims, **characterized in that** the reference element is sent (R) to the destination domain (3) in a data format requiring less data storage capacity as the data file stored in the local domain (1), preferably the data format of the reference element is URL or URN.

6. The method according to any preceding claim, **characterized in that** the format of the requested data file sent (DF) to the destination domain (3) is an image format, preferably a TIFF format.

7. The method according to any preceding claim 6, **characterized in that** the method further comprises the step of converting the format of the data file into a GIF format at the destination domain (3) in order to avoid a TIFF viewer at the destination domain (3).

8. The method according to any preceding claim, **characterized in that** the method further comprises the step of caching at least received data files (DF) at the destination domain (3) at a proxy data server (32), preferably also caching notifications.

9. The method according to any preceding claim, **characterized in that** the method further comprises the step of identifying shipments, for which shipment data files are required, with an import processing application (33).

10. System for providing data files comprising at least one local domain (1), a central domain (2) and at least one destination domain (3), where
- the local domain (1) comprises a data file store (13) to store data files and a notify interface (1-2) connected to at least the central domain (2) to send a notification (N-C) about the data files stored on the local domain (1) and to provide (P) a reference element to at least the central domain (2), wherein the reference element indicates the local domain (1) where the data file was stored,
- the central domain (2) is further connected 21-3, 22-3) to the at least one destination domain (3) and suitable to store at least the reference elements and suitable to provide information about the availability of data files based on search criteria for data files transmitted from the destination domain (3) and to send (P) the reference element assigned to the demanded data file to the destination domain (3); and where
- the destination domain (3) is at least connected to the local domains (1) via a retrieve interface (1-3) to submit (P) the reference element of the demanded date file to the local domain (1), where the demanded data filed is stored, and to receive (DF) the demanded data file from the local domain (1) as response to the submitted reference element.

11. System according to claim 10, **characterized in that** the central domain (2) comprises a shipment clearance store (21) with a shipment clearance information query interface (21-3) and a central index store (22) with a locate data interface (22-3) both connected to the destination domain (3), where the search criteria are transmitted (T) from the destination domains (3) via the shipment clearance information query interface (21-3) in case of search criteria for clearance and availability or via the locate data interface (22-3) in case of search criteria for data attributes.

12. System according to claim 10, **characterized in that** the data format of the reference elements is URL or URN and/or that the data file has an image format, preferably a TIFF format.

13. System according to claim 12, **characterized in that** the destination domain (3) further comprises a proxy data server (32) suitable to cache at least received data files (DF) from the local domain (1), preferably also caching notifications.

14. System according to any of the claims 10 to 13, **characterized in that** the destination domain (3) further comprises an import processing application (31) to identify shipments for which data filed are required for further processing.

15. System according to any of the claims 10 to 14, **characterized in that** the local domain (1) further comprises a data capture application (11) suitable to provide data files to be stored in the data file store (13).
